# EUROPEAN PATENT SPECIFICATION

(11) **EP 3 460 866 B1**
(45) Date of publication and mention of the grant of the patent: **18.01.2023**
(21) Application number: 17193008.4
(22) Date of filing: 25.09.2017
(51) Int. Cl.: H01M 50/103, H01M 50/553, H01M 50/562, H01M 50/627, H01M 50/178, H01M 10/04, H01M 50/119, H01M 50/122, H01M 50/133, H01M 10/052, H01M 50/55

(54) **FLAT CELLS**
FLACHZELLEN
CELLULES PLATES

(43) Date of publication of application: 27.03.2019
(73) Proprietor: H&T Rechargeable LLC, Waterbury, CT 06710 (US)
(72) Inventor: Seefeldt, Volker, 34431 Marsberg (DE)
(74) Representative: Uexküll & Stolberg

(56) References cited:
- EP-A1- 2 854 200
- US-A1- 2011 117 424
- US-A1- 2011 250 485
- US-A1- 2012 231 318
- US-A1- 2015 147 615
- US-A1- 2017 069 940
- US-B2- 9 502 694

## Description

### FIELD OF THE INVENTION

The present invention relates to lithium ion or lithium-polymer battery cells, and to lithium ion or lithium-polymer battery packs for use in automotives or portable power tools, garden tools and home appliances.

### BACKGROUND TO THE INVENTION

Pouch-type lithium ion and lithium-polymer battery cells (sometimes referred-to as coffee bag or foil cells) are well-known, e.g. from WO 2016/019924 A1, US 2017/214079 A1, EP 2 846 377 or US-Patent 9,537,173 B2 and offer an efficient way to design and produce high capacity and low resistance power capable to deliver high power with minimum heat generation.

Further, US9502694 B2 discloses a pouch having a frame adhered to two laminate sheets to form the cell case; US2011/250485 A1 and US2017/069940 A1 disclose battery cells comprising closable ducts formed in their outer cases to allow for an electrolyte to be injected into the batteries; and US2012/231318 A1 discloses a battery assembly.

The pouch cell makes the most efficient use of space and achieves a 90% to 95% packaging efficiency, the highest among battery packs. Rather than using a metallic cylinder, the electrodes and the solid electrolyte are usually stacked in layers or laminations and enclosed in a foil envelope. The pouch pack finds applications in consumer, military, as well as automotive applications.

The foil envelope is typically made of two deep drawn composite foils, typically aluminum-polymer-composite foils, welded together at their edges to form a pouch having cell space within the pouch. The battery cell is located within the cell space. Conductive foil tabs welded to the electrode and sealed to the pouch carry the positive and negative terminals to the outside.

For producing the pouch, two deep-drawn aluminum-polymer-composite foils are welded together at their edges by means of heat sealing. The edges of the pouch foils must be carefully joined in order to prevent damages to the compound. The cell is activated by filling a liquid electrolyte into the cell, and aging. The electrolyte filling is realized using an injection lance in order to meter the correct amount of electrolyte required for the cell. A process of manufacturing a pouch cell is described e.g. in R. Schröder et al. "Comparatively assessing different shapes of lithium-ion battery cells", Procedia Manufacturing 8, 2017, pages 104-111.

In pouch-type lithium ion and lithium-polymer battery cells swelling as a result of gas generation during charge and discharge is a concern. The pressure from swelling can even crack the foil envelope open and in some cases break the display or electronic circuit. To prevent swelling, manufacturers may add excess film to create a "gas bag" outside the cell. WO 2011/0177377 A1 e.g. suggests providing a pouch battery cell container, including at least, one battery cell compartment, is interposed between two end plates. The planar electrode surfaces of a pouch battery cell, housed within the battery cell compartment, are subjected to a constant and optimal amount of compressive force during cell expansion and contraction for battery cell optimization. A first end plate and a second end plate are coupled together by a plurality of connecting devices, wherein each connecting device includes an elastic deformation component. As the battery cells housed within the battery container expand and/or contract, the first and second end plates move relative to each other while constrained by the elastic deformation device so as to maintain a constant amount of compressive force on the planar electrode surfaces housed within the battery cell. Still, in case the pressure from swelling cracks a battery cover open, the crack may occur at any place making it difficult to guide the gases (e.g. CO and CO₂) to a place where they may not create harm. Also using an injection lance for filling the cell may cause disruptions in the pouch structure thereby creating potential leakages.

Finally, in order to increase battery capacity, it would be necessary to enlarge the pouch volume. Since the length and width of a pouch cell are usually determined by the space available for storing the cell in the intended device, the battery capacity must be controlled by its thickness. However, there is a limitation to the thickness of a pouch battery, as aluminum foils drawn to more than about 8 mm may disrupt. Accordingly it is an object of the present invention to provide lithium ion or lithium-polymer battery cells which may be stacked, may be produced at any desired thickness, which may be construed having defined burst zones, and which will not leave leakages when filling the cell with an injection lance.

### SUMMARY OF THE INVENTION

According to a first embodiment of the present invention relates to lithium ion or lithium-polymer battery cells or battery cell precursors as described in the appended claim 1, and to a method of producing the same as described in appended claim 13.

The presence of a frame hitherto for unknown allows the production of battery cells having an increased thickness, and connected therewith higher capacity versus the common pouch cells wherein pouch ends are directly connected to each other. Further, the frame allows for the presence of various functions at a defined location. The frame may be of any desirable shape, such as an angular shape, e.g. hexangular, rectangular, triangular, square; or an oval, e.g. circular shape. Preferably, the frame has a rectangular shape. The frame is made of a material selected from aluminum, an aluminum composite or steel.

According to an embodiment of the present invention, the frame comprises ducts for carrying the positive and negative terminals from the inner hollow space to the outside of the battery cell.

According to the invention, the frame is further equipped with a closable, e.g. backfillable, duct for introducing an electrolyte, preferably a liquid electrolyte into the battery cell, by means of an injection lance in order to activate the battery thereby transforming the battery cell precursor into a battery cell.

According to another embodiment of the present invention the frame comprises a predetermined breaking point. When a predetermined pressure is exceeded e.g. in case of a short-circuit fault, the breaking point may cause the frame to disrupt at a predetermined location so as the pressure within the cell may be released and possibly harmful gases may be conducted out of the battery cell or of a battery pack comprising the battery cell in a controlled manner. The predetermined breaking point may be constructed in the form of one or more grooves or by thinning of the material within the frame.

According to a further embodiment of the present invention, the sheets made of a hydrogen-tight material have a sheet thickness of from 0.1 to 0.5 mm, preferably from 0.2 to 0.3 mm. The sheets are made of a hydrogen-tight material, preferably of aluminum, and aluminum-polymer composite or steel.

According to still another embodiment of the present invention, one or more of the two or more sheets are deep drawn. In the context of the present invention "deep drawing" is meant to designate a sheet metal forming process in which a sheet metal blank or a metal-polymer-composite blank is drawn into a forming die by the mechanical action of a punch. In the context of the present invention, however, it is not necessary that the depth of the drawn part exceeds its cross-section. Typically the sheet is deep drawn only a few millimeters, such as from 0.5 mm to 8 mm, preferably from 1.5 to 3 mm, depending on the cell dimensions. Since the frame already provides a certain thickness, it is not necessary to provide deep drawn sheets on one or both sides of the frame. However, it is preferred that one or more, preferably two or more of the sheets are deep drawn.

### DETAILED DESCRIPTION OF PREFERRED EMBODIMENTS OF THE INVENTION

According to an embodiment of the invention, the two or more sheets may be affixed onto the upper and lower sides of the frame by means of welding, preferably by means of laser welding. Laser welding is a well-known non-contact welding technique, used e.g. for welding battery tabs to terminals or for welding dissimilar metals. Laser welding machines are e.g. available from Amada Miyachi America, Inc., Monrovia, CA, U.S.A. or from Manz AG, Reutlingen, Germany.

The electrode assembly within the inner hollow space of the battery cell is preferably configured in a stacked or in a stacked/folded structure.

Preferably, the battery cell comprises one or more anode terminals formed of a nickel-plated copper and one or more cathode terminals formed of aluminum. Preferably, the battery cells are structured such that anode and cathode terminals face same or opposite ends of the battery cell, respectively.

According to still another embodiment of the present invention, the frame may be equipped with one or more lashing lugs to ease stacking of two or more battery cells into a stacked battery pack. When the frame has an angular shape, such as a hexangular, rectangular, triangular or square shape, the lashing lugs are preferably located at one or more angles, such as two or more angles of the frame. Preferably, lashing lugs are located at all angles of the frame. More preferably, the frame has a rectangular structure and is equipped with four lashing lugs, one at each corner of the frame

According to still another embodiment of the present invention, one or more of the sheets comprises structural reinforcements, e.g. in the form of fins, preferably deep drawn, to strengthening their structural resilience.

It is apparent to anyone skilled in the art that the present invention also encompasses embodiments, wherein at least one, two or more, of the above embodiments are combined.

According to a still further embodiment the present invention relates to a battery assembly comprising at least two battery cells according to any one of the embodiments of the invention outlined hereinabove connected in series or in parallel. Preferably the battery cells are arranged in a stacked structure, and are, more preferably, connected via one or more lashing lugs within the frame as described above. Preferably, the stacked battery cells are interposed between end plates.

According to still another embodiment, the present invention relates to a method of producing a battery cell according to the invention comprising providing two or more sheets made of an hydrogen-tight material, affixing at least one sheet to a lower side of a frame of a material selected from aluminum, an aluminum composite or steal, providing an electrode assembly of one or more anodes, one or more cathodes and one or more separators interposed between anode and cathodes on top of the at least one sheet to an inner side of the frame, attaching one or more positive and one or more negative electrode terminals to the electrode assembly so as to cause the terminals to protrude from the inner side of the frame to an outside thereof, affixing at least another sheet to an upper side of the frame, and activating the battery cell by introducing an electrolyte, preferably a liquid electrolyte into the battery cell, preferably by means of an injection lance.

Preferably, the sheets are affixed to the frame by means of laser welding.

The invention is now described by means of the appended figures, which are provided by way of illustration, and which should not limit the scope of the present invention.

In the figures,
**Fig. 1** depicts a battery cell or battery cell precursor according to the present invention in angled view wherein the frame comprises lashing lugs;
**Fig. 2** depicts the battery cell or battery cell precursor according to **Figure** 1 in side view;
**Fig. 3** depicts the battery cell or battery cell precursor according to **Figure** 1 in semi-exploded view;
**Fig. 4** depicts an assembly of stacked battery cells according to the present invention in angled view which are connected via rods guided through the lashing lugs;
**Fig. 5** depicts a deep drawn sheet of a hydrogen-tight material in angled view which exhibits structural reinforcements in the form of fins;
**Fig. 6** depicts another battery cell or battery cell precursor according to in side view, which has an asymmetrical structure;
**Fig. 7** depicts another battery cell or battery cell precursor according to in side view, which has an symmetrical structure, however with a thicker frame.

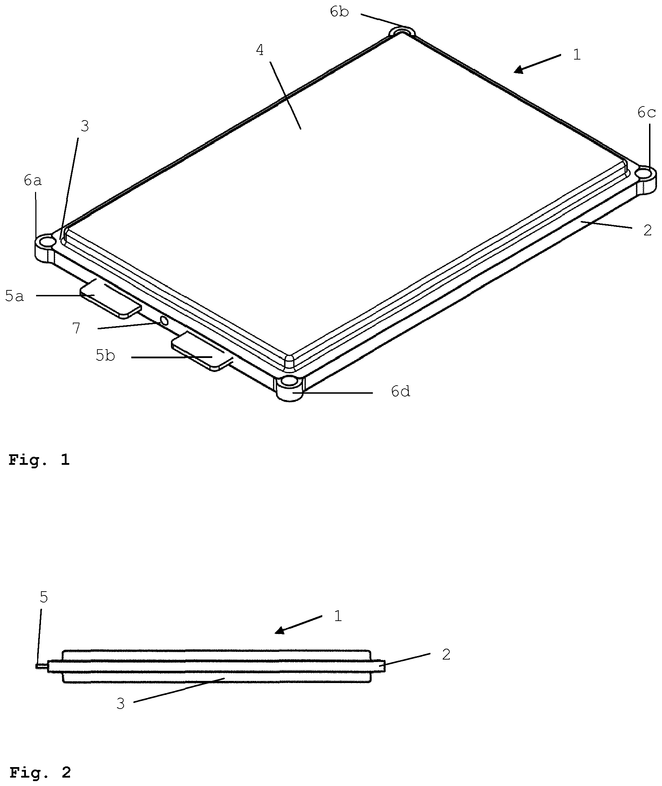

Referring now to **Figure 1****,** there is shown a battery cell or battery cell precursor **1** according to the present invention which exhibits a frame **2** of a hydrogen-tight material, such as aluminum, an aluminum alloy or steel onto which two sheets **3** made of a hydrogen-tight material, such as aluminum, an aluminum-polymer-composite or steel are affixed, preferably by laser welding, one on the upper side of the frame **2** and the other (not shown) one onto the lower side of the frame **2.** The sheets comprise a deep drawn section **4** to provide an inner hollow space comprising an electrode assembly (not shown) of one or more anodes, one or more cathodes and one or more separators interposed between anode and cathodes, although a deep drawn section **4** would not be necessary since the frame **2** already may provide sufficient space to enclose an electrode assembly. Generally, however, the sheet may be deep drawn to a depth of only a few millimeters, such as from 0.5 mm to 8 mm, preferably from 1.5 to 3 mm.

In the embodiment according to **Figure 1** one positive and one or negative electrode terminals **5a, 5b** protrude from the inner hollow space to an outside of the battery cell at same ends of the frame. The electrode terminals **5a, 5b** may protrude via ducts within the frame comprises ducts for carrying the positive and negative terminals from the inner hollow space to the outside of the battery cell, or they may be interposed between frame and aluminum sheet.

In the embodiment according to **Figure 1****,** frame 2 exhibits a rectangular form which is equipped with four lashing lugs **6a, 6b, 6c, 6d,** one at each corner of the frame. The lashing lugs ease stacking of two or more battery cells into a module by stacking the battery cells and securing them via rods which are guided through the lashing lugs.

In the embodiment according to **Figure 1****,** frame **2** is further equipped with a closable duct **7** which allows introducing an electrolyte, preferably a liquid electrolyte into the battery cell, preferably by means of an injection lance in order to activate the battery thereby transforming the battery cell precursor into a battery cell.

Referring now to **Figure 2****,** there is shown the battery cell or battery cell precursor **1** according to **Figure 1** in side view which exhibits a frame **2** of a hydrogen-tight material onto which two sheets **3** made of a hydrogen-tight material, such as aluminum, an aluminum-polymer-composite or steel are affixed, one on the upper side of the frame **2** and the other one onto the lower side of the frame **2.** Electrode terminals **5** protrude to an outside of the battery cell.

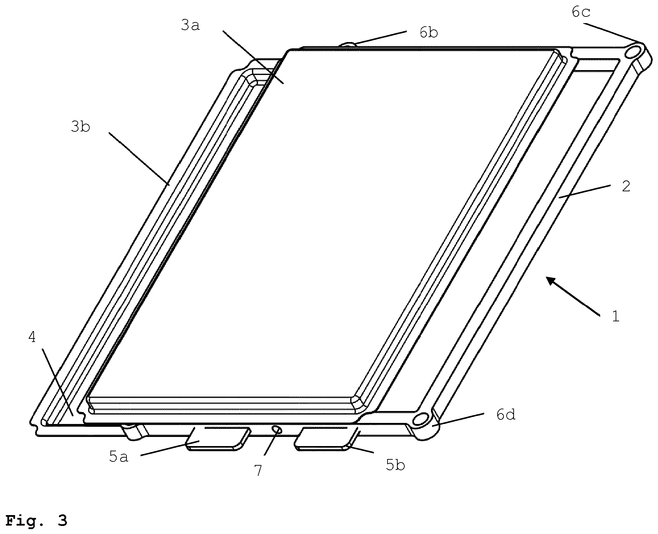

Referring now to **Figure 3****,** there is shown the battery cell or battery cell precursor **1** according to **Figure 1** in side view which exhibits a frame **2** of a hydrogen-tight material onto which two sheets **3a, 3b** made of a hydrogen-tight material, such as aluminum, an aluminum-polymer-composite or steel are affixed, one **3a** on the upper side of the frame **2** and the other one **3b** on the lower side of the frame **2.** Electrode terminals **5a, 5b** protrude to an outside of the battery cell. Frame **2** further exhibits a rectangular form which is equipped with four lashing lugs **6a, 6b, 6c, 6d,** one at each corner of the frame, and a closable duct **7** which allows introducing an electrolyte.

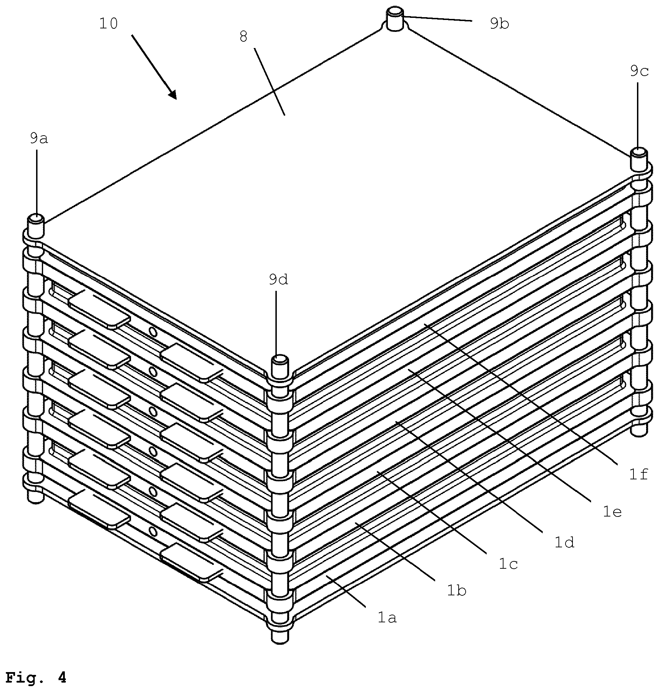

Referring now to **Figure 4****,** there is shown a battery cell assembly **10** comprising a stack of six battery cells **1a, 1b, 1c, 1d, 1e, 1f** according to the present invention stacked onto one another and interposed between to end plates **8.** The battery cells are secured to each other via rods **9a, 9b, 9c, 9d** which are guided through the lashing lugs at the corners of the frames.

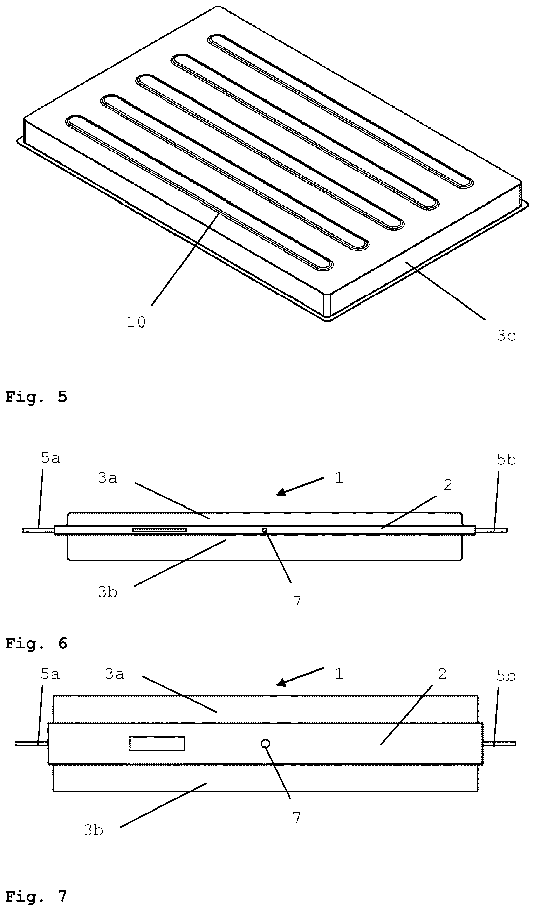

Referring now to **Figure 5****,** there is shown a deep drawn sheet **3c** of a hydrogen-tight material, such as aluminum, an aluminum-polymer-composite or steel which exhibits structural reinforcements in the form of fins **10.** The fins provide structural resilience.

Referring now to **Figure 6****,** there is shown another battery cell or battery cell precursor **1** in side view which exhibits a frame **2** of a hydrogen-tight material onto which two sheets **3a, 3b** made of a hydrogen-tight material, such as aluminum, an aluminum-polymer-composite or steel are affixed, one **3a** having a lower depth on the upper side of the frame **2** and the other one **3b** having a higher depth onto the lower side of the frame **2.** Electrode terminals **5a, 5b** protrude to an outside at opposing sides of the battery cell. A closable duct **7** which allows introducing an electrolyte is also provided on the frame.

Referring now to **Figure 7****,** there is shown another battery cell or battery cell precursor **1** in side view which exhibits a thicker frame **2** of a hydrogen-tight material onto which two sheets **3a, 3b** made of a hydrogen-tight material, such as aluminum, an aluminum-polymer-composite or steel are affixed, one **3a** on the upper side of the frame **2** and the other one **3b** onto the lower side of the frame **2,** where both sheets have an equal drawn depth. Electrode terminals **5a, 5b** protrude to an outside at opposing sides of the battery cell. A closable duct **7** which allows introducing an electrolyte is also provided on the frame.

## Claims

1. A lithium ion or lithium-polymer battery cell or battery cell precursor, which comprises
a) a frame (2) of a material selected from aluminum, an aluminum composite or steel, the frame (2) exhibiting an upper side and a lower side;
b) two or more sheets (3) made of a material selected from aluminum, an aluminum-polymer-composite or steel, wherein one or more of the two or more sheets (3) being affixed onto the upper side of the frame (2) and one or more other of the two or more sheets (3) being affixed onto the lower side of the frame (2) ;
c) wherein the frame (2) together with the two or more sheets (3) being affixed to the frame (2) to form an inner hollow space comprising an electrode assembly of one or more anodes, one or more cathodes and one or more separators interposed between anode and cathodes;
d) wherein one or more positive and one or more negative electrode terminals (5a, 5b) protrude from the inner hollow space to an outside of the battery cell (1);
**characterized in**
e) **that** the frame (2) is equipped with a closable duct (7) for introducing an electrolyte into the cell (1) by means of an injection lance.

2. The battery cell of claim 1, wherein the frame (2) comprises ducts for carrying the positive and negative terminals (5a, 5b) from the inner hollow space to the outside of the battery cell (1).

3. The battery cell of claims 1 to 2, wherein the frame (2) comprises a predetermined breaking point.

4. The battery cell of claim 3, wherein the predetermined breaking point is constructed in the form of one or more grooves or by thinning of the material within the frame (2) .

5. The battery cell of any of the previous claims, wherein frame (2) is equipped with one or more lashing lugs (6a, 6b, 6c, 6d).

6. The battery cell of claim 5, wherein the frame (2) has a rectangular structure and is equipped with four lashing lugs (6a, 6b, 6c, 6d), one at each corner of the frame (2) .

7. The battery cell of any of the previous claims, wherein one or more of the sheets (3) are deep drawn.

8. The battery cell of to any of the previous claims, wherein one or more of the sheets (3) comprises structural reinforcements (10).

9. The battery cell of claim 8, wherein the structural reinforcements are present in the form of fins (10).

10. A battery assembly comprising at least two battery cells (1) according to any one of the previous claims connected in series or in parallel.

11. The battery assembly of claim 10, wherein the at least two battery cells (1) are arranged in a stacked structure.

12. The battery assembly according to claims 5 and 10, wherein the at least two battery cells (1) are connected via one or more rods (9a, 9b, 9c, 9d) which are guided through one or more of the lashing lugs (6a, 6b, 6c, 6d) within the frame (2).

13. A method of producing a battery cell according to any one of claims 1 to 9, comprising providing the two or more sheets (3) made of a material selected from aluminum, an aluminum composite or steel, affixing at least one sheet (3) to a lower side of the frame (2) of a material selected from aluminum, an aluminum composite or steel, providing the electrode assembly of one or more anodes, one or more cathodes and one or more separators interposed between anode and cathodes on top of the at least one sheet (3) to an inner side of the frame (2), attaching one or more positive and one or more negative electrode terminals (5a, 5b) to the electrode assembly so as to cause the terminals (5a, 5b) to protrude from the inner side of the frame (2) to an outside thereof, affixing at least another sheet (3) of a material selected from aluminum, an aluminum composite or steel to an upper side of the frame (2), and activating the battery cell (1) by introducing an electrolyte.

14. The method of claim 13 wherein the electrolyte is introduced into the cell (1) by means of an injection lance.

## Patentansprüche

1. Lithium-Ionen- oder Lithium-Polymer-Batteriezelle oder ein Batteriezellenvorläufer, der Folgendes umfasst
a) einen Rahmen (2) aus einem Material, ausgewählt aus Aluminium, einem Aluminiumverbundwerkstoff oder Stahl, wobei der Rahmen (2) eine Oberseite und eine Unterseite aufweist;
b) zwei oder mehr Bleche (3) aus einem Material, ausgewählt aus Aluminium, einem Aluminium-Polymer-Verbundwerkstoff oder Stahl, wobei eines oder mehrere der zwei oder mehreren Bleche (3) an der Oberseite des Rahmens (2) und ein oder mehrere andere der zwei oder mehreren Bleche (3) an der Unterseite des Rahmens (2) befestigt sind;
c) wobei der Rahmen (2) zusammen mit den zwei oder mehreren Blechen (3), die an dem Rahmen (2) befestigt sind, einen inneren Hohlraum bilden, der eine Elektrodenanordnung aus einer oder mehreren Anoden, einer oder mehreren Kathoden und einem oder mehreren Separatoren umfasst, die zwischen Anode und Kathoden angeordnet sind;
d) wobei ein oder mehrere positive und ein oder mehrere negative Elektrodenanschlüsse (5a, 5b) aus dem inneren Hohlraum zu einer Außenseite der Batteriezelle (1) herausragen;
**dadurch gekennzeichnet,**
e) **dass** der Rahmen (2) mit einem verschließbaren Kanal (7) zum Einbringen eines Elektrolyten in die Zelle (1) mittels einer Injektionslanze ausgestattet ist.

2. Batteriezelle nach Anspruch 1, wobei der Rahmen (2) Kanäle zur Führung der positiven und negativen Anschlüsse (5a, 5b) vom inneren Hohlraum zur Außenseite der Batteriezelle (1) umfasst.

3. Batteriezelle nach einem der Ansprüche 1 bis 2, wobei der Rahmen (2) eine Sollbruchstelle aufweist.

4. Batteriezelle nach Anspruch 3, wobei die Sollbruchstelle in Form von einer oder mehreren Rillen oder durch Ausdünnung des Materials innerhalb des Rahmens (2) ausgebildet ist.

5. Batteriezelle nach einem der vorhergehenden Ansprüche, wobei der Rahmen (2) mit einer oder mehreren Verzurrösen (6a, 6b, 6c, 6d) ausgestattet ist.

6. Batteriezelle nach Anspruch 5, wobei der Rahmen (2) eine rechteckige Struktur aufweist und mit vier Verzurrösen (6a, 6b, 6c, 6d) ausgestattet ist, eine an jeder Ecke des Rahmens (2).

7. Batteriezelle nach einem der vorhergehenden Ansprüche, wobei eines oder mehrere der Bleche (3) tiefgezogen sind.

8. Batteriezelle nach einem der vorhergehenden Ansprüche, wobei eines oder mehrere der Bleche (3) strukturelle Verstärkungen (10) aufweisen.

9. Batteriezelle nach Anspruch 8, wobei die strukturellen Verstärkungen in Form von Rippen (10) vorhanden sind.

10. Batterieanordnung mit mindestens zwei Batteriezellen (1) nach einem der vorhergehenden Ansprüche, die in Reihe oder parallel geschaltet sind.

11. Batterieanordnung nach Anspruch 10, wobei die mindestens zwei Batteriezellen (1) in einer gestapelten Struktur angeordnet sind.

12. Batterieanordnung nach den Ansprüchen 5 und 10, wobei die mindestens zwei Batteriezellen (1) über ein oder mehrere Stangen (9a, 9b, 9c, 9d) verbunden sind, die durch eine oder mehrere der Verzurrösen (6a, 6b, 6c, 6d) innerhalb des Rahmens (2) geführt werden.

13. Verfahren zur Herstellung einer Batteriezelle nach einem der Ansprüche 1 bis 9, umfassend
Bereitstellen der zwei oder mehr Blechen (3) aus einem Material, ausgewählt aus Aluminium, einem Aluminiumverbundwerkstoff oder Stahl,
Befestigen mindestens eines Blechs (3) an einer Unterseite des Rahmens (2) aus einem Material, ausgewählt aus Aluminium, einem Aluminiumverbundwerkstoff oder Stahl, Bereitstellen der Elektrodenbaugruppe aus einer oder mehreren Anoden, einer oder mehreren Kathoden und einem oder mehreren Separatoren, die zwischen Anode und Kathoden angeordnet sind, auf der Oberseite des mindestens einen Blechs (3) an einer Innenseite des Rahmens (2), Befestigen eines oder mehrerer positiver und eines oder mehrerer negativer Elektrodenanschlüsse (5a, 5b) an der Elektrodenanordnung, so dass die Anschlüsse (5a, 5b) von der Innenseite des Rahmens (2) zu einer Außenseite desselben vorstehen,
Befestigen mindestens eines weiteren Blechs (3) aus einem Material, ausgewählt aus Aluminium, einem Aluminiumverbundwerkstoff oder Stahl, an einer Oberseite des Rahmens (2), und
Aktivieren der Batteriezelle (1) durch Einleiten eines Elektrolyten.

14. Verfahren nach Anspruch 13, wobei der Elektrolyt mit Hilfe einer Injektionslanze in die Zelle (1) eingebracht wird.

## Revendications

1. Cellule de batterie lithium-ion ou lithium-polymère ou précurseur de cellule de batterie, qui comprend
a) un cadre (2) en un matériau choisi parmi l'aluminium, un composite d'aluminium ou l'acier, le cadre (2) présentant une face supérieure et une face inférieure :
b) deux feuilles ou plus (3) constituées d'un matériau choisi parmi l'aluminium, un composite aluminium-polymère ou l'acier, une ou plusieurs des deux feuilles ou plus (3) étant fixé sur le côté supérieur du cadre (2) et une ou plusieurs autres des deux ou plusieurs feuilles (3) étant fixé sur le côté inférieur du châssis (2);
c) dans lequel le cadre (2) ainsi que les deux ou plusieurs feuilles (3) sont fixés au cadre (2) pour former un espace creux intérieur comprenant un ensemble d'électrodes d'une ou plusieurs anodes, une ou plusieurs cathodes et un ou plusieurs séparateurs interposés entre anode et cathodes :
d) dans lequel une ou plusieurs bornes d'électrodes positives et une ou plusieurs bornes d'électrodes négatives (5a, 5b) dépassent en saillie depuis l'espace creux intérieur vers un extérieur de la cellule de batterie (1) ;
caractérisé en
e) le cadre (2) est équipé d'un conduit obturable (7) pour introduire un électrolyte dans la cellule (1) au moyen d'une lance d'injection.

2. Cellule de batterie selon la revendication 1, dans laquelle le cadre (2) comprend des conduits pour transporter les bornes positive et négative (5a, 5b) de l'espace creux intérieur vers l'extérieur de la cellule de batterie (1).

3. Cellule de batterie selon les revendications 1 à 2, dans laquelle le cadre (2) comprend un point de rupture prédéterminé.

4. Cellule de batterie selon la revendication 3, dans laquelle le point de rupture prédéterminé est réalisé sous la forme d'une ou plusieurs rainures ou par amincissement du matériau à l'intérieur du cadre (2).

5. Cellule de batterie selon une quelconque des revendications précédentes, dans laquelle le cadre (2) est équipé d'une ou plusieurs pattes d'arrimage (6a, 6b, 6c, 6d).

6. Cellule de batterie selon la revendication 5, dans laquelle le cadre (2) possède une structure rectangulaire et est équipé de quatre pattes d'arrimage (6a, 6b, 6c, 6d), une à chaque coin du cadre (2).

7. Cellule de batterie selon une quelconque des revendications précédentes, dans laquelle une ou plusieurs des feuilles (3) sont embouties.

8. Cellule de batterie selon une quelconque des revendications précédentes, dans laquelle une ou plusieurs des feuilles (3) comprend des renforts structurels (10).

9. Cellule de batterie selon la revendication 8, dans laquelle les renforts structurels sont présents sous la forme d'ailettes (10).

10. Ensemble de batterie comprenant au moins deux éléments de batterie (1) selon une quelconque des revendications précédentes connectés en série ou en parallèle.

11. Ensemble de batterie selon la revendication 10, dans lequel les au moins deux cellules de batterie (1) sont agencées en une structure empilée.

12. Ensemble de batterie selon les revendications 5 et 10, dans lequel les au moins deux cellules de batterie (1) sont reliées par une ou plusieurs tiges (9a, 9b, 9c, 9d) qui sont guidées à travers une ou plusieurs des pattes d'arrimage (6a, 6b, 6c, 6d) à l'intérieur du cadre (2).

13. Procédé de production d'une cellule de batterie selon une quelconque des revendications 1 à 9, comprenant la fourniture des deux feuilles ou plus (3) fait d'un matériau choisi parmi l'aluminium, un composite d'aluminium ou l'acier, fixant au moins une feuille (3) à un côté inférieur du cadre (2) en un matériau choisi parmi l'aluminium, un composite d'aluminium ou d'acier, fournissant une ou plusieurs anodes à l'ensemble d'électrodes, d'une ou plusieurs cathodes et d'un ou plusieurs séparateurs interposés entre l'anode et les cathodes au-dessus de la au moins une feuille (3) sur un côté intérieur du cadre (2), fixant un ou plusieurs contacts positifs et une ou plusieurs bornes d'électrodes négatives (5a, 5b) à l'ensemble d'électrodes de manière à amener les bornes (5a, 5b) à dépasser du côté intérieur du cadre (2) vers l'extérieur de celui-ci, en fixant au moins une autre feuille (3) d'un matériau choisi parmi l'aluminium, un composite d'aluminium ou l'acier sur un côté supérieur du cadre (2), et activer la cellule de batterie (1) en introduisant un électrolyte.

14. Procédé selon la revendication 13, dans lequel l'électrolyte est introduit dans la cellule (1) au moyen d'une lance d'injection.
